# EUROPEAN PATENT SPECIFICATION

(11) **EP 2 224 525 B1**
(45) Date of publication and mention of the grant of the patent: **14.01.2015**
(21) Application number: 09154039.3
(22) Date of filing: 27.02.2009
(51) Int. Cl.: H01M 8/04, H01M 8/00, H01M 8/02

(54) **Location of a fuel cell on a mobile device**
Standorterkennung einer Kraftstoffzelle in einer mobilen Vorrichtung
Emplacement d'une pile à combustible dans un dispositif mobile

(43) Date of publication of application: 01.09.2010
(73) Proprietor: BlackBerry Limited, Waterloo, ON N2K 0A7 (CA)
(72) Inventor: Wormald, Chris, Waterloo Ontario N2V 1K8 (CA); Reddy, Raymond, Toronto Ontario M5J 2X1 (CA); Winger, Lyall Kenneth, Waterloo Ontario N2L 3W8 (CA)
(74) Representative: Moore, Barry

(56) References cited:
- EP-A- 1 672 464
- WO-A-00/35032
- WO-A-2007/037422
- WO-A-2007/117212
- JP-A- 2000 148 307
- US-A1- 2005 053 808
- US-A1- 2007 015 551
- US-A1- 2007 196 715

## Description

### FIELD OF THE DISCLOSURE

The present disclosure relates to fuel cell assemblies and in particular to fuel cell assemblies for mobile devices.

### BACKGROUND

A fuel cell is an electric generating cell that converts fuel to electricity in an electrochemical energy conversion process. Fuel cells are different from batteries in that they consume a reactant, which must be replenished. Fuel cells, in the electrochemical reaction, convert the fuel from the anode side to mix with an oxidant on the cathode side, resulting in a reaction that has, in one type of fuel cell, a by-product of water and heat.

In current designs of mobile devices, the battery is generally located at the back of the device in order to allow a user access to the battery compartment. Specifically, a user may need to change the battery or at the initialization of the device may need to insert the battery, and therefore access to a battery compartment is generally provided on the back of the device.

EP 1 672 464 discloses a mobile terminal device and a method for radiating heat therefrom, more particularly, a structure of a circuit board in a mobile terminal device, on which heat-generating components are mounted, and to a method for radiating heat using the circuit board.

WO 2007/117212 discloses a fuel cell device for use in planar configuration air breathing polymer electrolyte electrochemical devices and to a support plate, gas connection means and clamping means for use in the fuel cell device.

WO 2007/037422 discloses a fuel cell which can be small-sized and multifunctionalized. Specifically disclosed is a fuel cell comprising a base, a fuel channel which is composed of a hollow portion of the base, an electrolyte member which is so arranged as to be in contact with a part of the fuel channel, and a coil conductor arranged on the base.

### BRIEF DESCRIPTION OF THE DRAWINGS

The present application will be better understood with reference to the drawings, in which:
**Figure 1** is a cross-sectional view of an exemplary prior art keyboard;
**Figure 2** is a perspective view of an exemplary fuel cell assembly;
**Figure 3** is a cross-sectional view of a keyboard having a fuel cell membrane inserted therein;
**Figure 4** is a perspective view of a fuel cell membrane as used in **Figure 3**;
**Figure 5** is a cross-sectional view of an alternative embodiment of a keyboard in which a fuel cell membrane forms part of the printed circuit board;
**Figure 6** is a perspective view of the combination fuel cell membrane and printed circuit board of **Figure 5**;
**Figure 7** is an exploded view of a mobile device having the fuel cell membrane of **Figure 4**;
**Figure 8** is an exploded view of a mobile device utilizing a combination printed circuit board and fuel cell membrane; and
**Figure 9** is a block diagram of an exemplary mobile device apt to be used with the present disclosure.

### DETAILED DESCRIPTION OF THE DRAWINGS

The present disclosure provides a mobile device comprising: a keyboard; a printed circuit board having at least one contact responsive to the keyboard; and a fuel cell assembly having: a fuel cell located between the keyboard and the printed circuit board, said fuel cell having a membrane and at least one aperture corresponding with the at least one contact; a tank adapted to store a fuel for the fuel cell; and piping connecting the tank with the fuel cell membrane, wherein the fuel cell ventilates through the keyboard. The keyboard comprises a key web having at least one key, the at least one key including channels for ventilation therein.

The present disclosure further provides a mobile device comprising: a keyboard; and a fuel cell assembly having: a fuel cell forming a printed circuit board for the mobile device, the fuel cell having a membrane and at least one contact responsive to the keyboard; a tank adapted to store a fuel for the fuel cell; and piping connecting the tank with the fuel cell membrane, wherein the fuel cell ventilates through the keyboard.

A mobile device is provided, comprising a keyboard, the keyboard comprising a key web having at least one key, the at least one key including channels for ventilation therein; and a fuel cell assembly having: a fuel cell, the fuel cell having a membrane and at least one contact responsive to the keyboard; a printed circuit board for the mobile device, the printed circuit board printed on the fuel cell; a tank adapted to store a fuel for the fuel cell; and piping connecting the tank with the fuel cell, wherein the fuel cell ventilates through the keyboard.

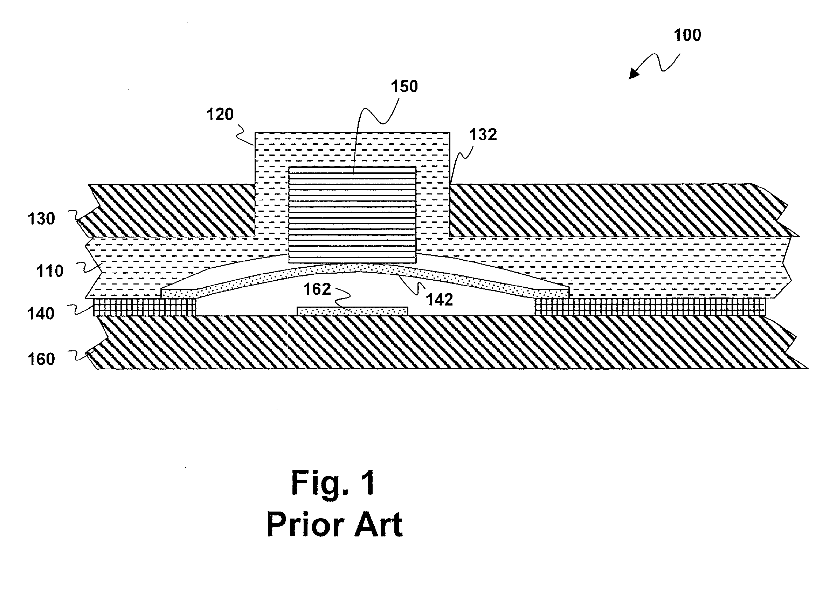

Reference is now made to **Figure 1**. **Figure 1** shows an exemplary cutaway section of a keyboard **100**. Keyboard **100** includes a key web **110** containing a plurality of keys. As an example, key **120** is shown. Key web **110** fits under device housing section **130**, which includes apertures **132** to accommodate a key **120**.

Key web **110** sits over a dome actuator panel **140** having a plurality of dome actuators **142** therein. Dome actuators **142** are resiliently biased to push a plunger **150** within key **120** into an upright position. Alternatively, the resiliency can be accomplished within key web **110** itself.

Dome actuator panel **140** is over a printed circuit board (PCB) **160.** PCB **160** contains a plurality of contacts **162.**

In operation, a user presses key **120,** which forces plunger **150** into actuator dome **142.** Actuator dome **142** flexes and makes contact with contact **162,** completing a circuit and causing a key stroke to be registered on the device.

The present disclosure is not meant to be limited by the number or orientation of keys **120** within a device housing section **130,** and a plurality of such configurations would be known to those in the art.

In some prior embodiments, instead of having a dome actuator **142,** key web **120** could be resilient enough to provide elasticity to return key **120** into its upright position. In this case plunger **150** could be formed of a conducting material that would close a connection on contact **162** thereby causing the key stroke to be registered.

Other embodiments of keypads or keyboards would also be known to those in the art and the present disclosure is not made to be limited to a particular type of keyboard actuation.

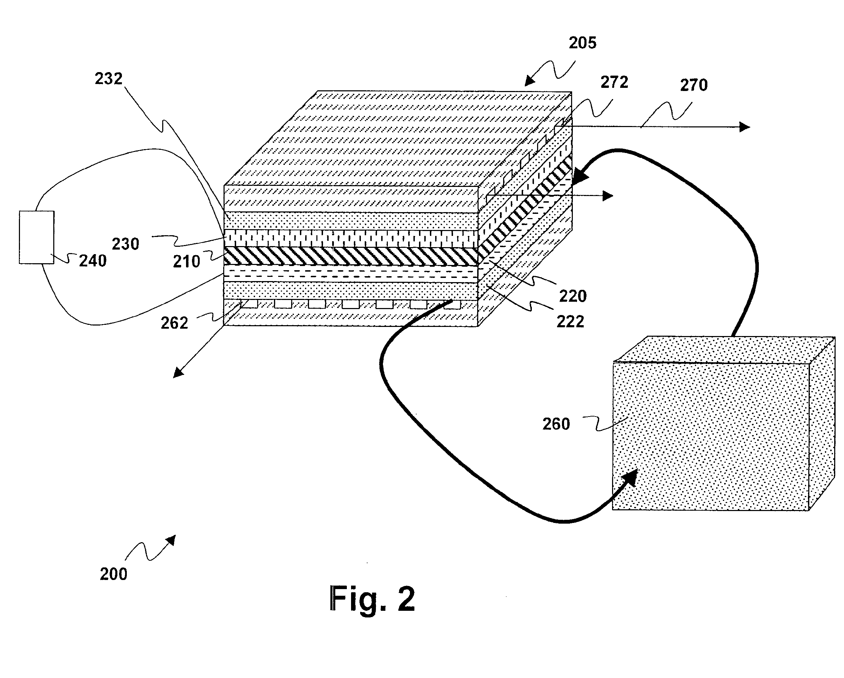

A fuel cell assembly may be added to a mobile device in order to provide for an extended energy life. In particular, the use of a fuel cell assembly could extend the power provision over a conventional battery and thus could be desirable for mobile devices. Fuel cell assemblies are known in the art, and one example of a fuel cell assembly is illustrated with respect to **Figure 2****.** The fuel cell assembly of **Figure 2** is not to be limiting however and other fuel cells would be applicable to the present disclosure. As used herein, a fuel cell assembly includes both a fuel cell and the apparatus allowing a fuel cell to work, including but not limited to the tank and associated piping.

Fuel cell assembly **200** of **Figure 2** includes a variety of layers.

In the case that fuel cell assembly **200** of **Figure 2** is a proton exchange membrane fuel cell, a fuel cell **205** consists of a polymer electrode membrane **210** that is displaced between an anode **220** and a cathode **230.** The polymer electrolyte membrane **210** is provided to only allow the exchange of protons between anode **220** and cathode **230** but does not allow electrons to flow in this way. This causes the electrons to flow through a circuit **240** thereby powering the circuit.

Other layers include backing layers **222** and **232** for anode **220** and cathode **230** respectfully.

In operation a fuel such as a hydrogen gas flows from a storage tank **260** through channels **262** and back into storage tank **260** for any unused fuel.

Similarly, an oxidant **270** flows through channels **272** and is adapted to react with the fuel to form heat and water. Thus, the only waste product in this case is either liquid or vapour.

In the above, the anode is the negative post of fuel cells and has several jobs. It conducts electrons that are freed from the hydrogen molecules to be used in circuit **240.**

The cathode is the positive side of the fuel cell and has the job of connecting the electrons back from the external circuit to catalyst.

The polymer electrolyte membrane **210** is a specially treated material that conducts only positively charged ions. Thus, the membrane blocks electrons and causes them to bypass the membrane through circuit **240.**

In an alternate embodiment, instead of a proton exchange membrane fuel cell, a polymer exchange fuel cell could be utilized. This is similar in that it has an anode and cathode separated by a proton exchange membrane. In this case a catalyst also exists between the proton exchange membrane and the cathode to facilitate the reaction of the oxygen and hydrogen. In one embodiment it is made of platinum nanoparticles that are very thinly coated onto carbon paper or cloth. The catalyst is rough and porous so that a large surface area on the platinum could be exposed to the hydrogen or oxygen.

The above therefore provides for a system having a fuel cell portion such as fuel cell **205,** which includes a membrane, and a fuel storage portion such as storage tank **260.** Further a circuit portion such as circuit **240** can be driven from the fuel cell assembly **200.**

In mobile devices one place to place the fuel cell is at the back of the unit where the vent, water vapour and heat can be vented through a grate. Problems with this include that the fuel cell takes up extra space and there is increased heat retention in the device. Further, devices tend to be placed on their back with keys facing upwards in most configurations, thereby blocking the grate and causing the heat to rise into the device.

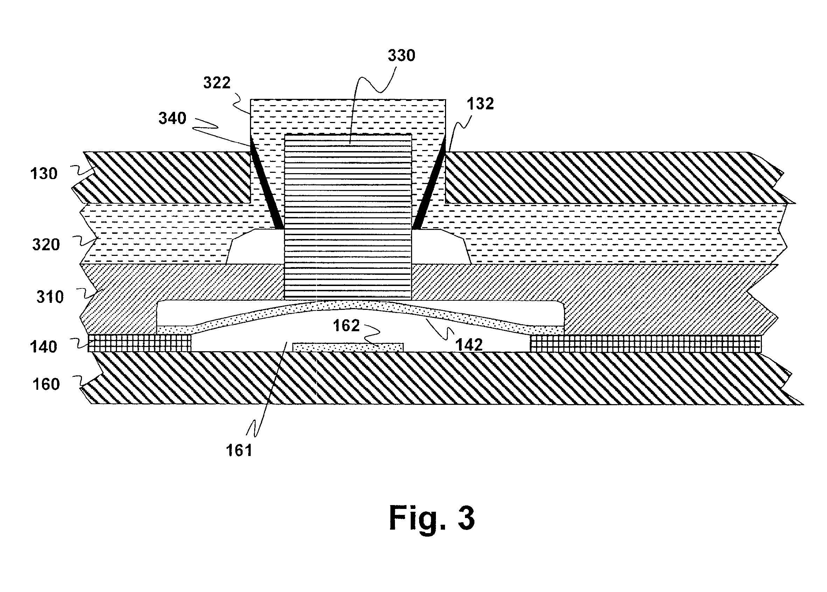

Reference is now made to **Figure 3****.** Similar reference numerals as used in **Figure 1** are used with reference to **Figure 3****.** In particular, a printed circuit board **160** includes a switch **161** having a contact **162** thereon. In the example of **Figure 3** a dome actuator **142** is adapted to be depressed and make contact and make contact **162** thereby completing the circuit and causing a keystroke to be registered. Dome actuator **142** sits on dome actuator panel **140.**

In accordance with the present disclosure a fuel cell **310** is added above dome actuator panel **140.** Such a fuel cell could be fuel cell **205** from **Figure 2****.**

A key web **320** sits above fuel cell **310** and includes a series of keys **322** protruding there from. A device housing section **130** includes a series of apertures **132** therein to allow a key **322** to protrude there from.

A plunger **330** extends from key **322** to make contact with dome actuator **142.**

Vents **340** are provided within key **322** to allow heat and vapour to escape from fuel cell **310** through the keypad of the mobile device.

As will be appreciated, in order to ensure a similar length of travel for a key depression, plunger **330** could be made longer than plunger **150** of **Figure 1** in order to allow it to proceed through fuel cell **310** to actuate the dome actuator **142.**

Several advantages are accomplished by putting the fuel cells under the phone keypad. A first advantage is that the key becomes a porous grill and with the fuel cell underneath allows for more natural venting. This also provides for airflow under the fuel cell as well. In addition, by placing the fuel cell under the keypad, minimal additional space is required to accommodate the fuel cell.

The embodiment of **Figure 3** also allows for more heat dissipation since the keypad is on top of the unit and not underneath it. Therefore heat will rise through the keypad when the device is left in a cradle or laid on its back.

A further advantage is that on the backside of the mobile device, dirt will tend to build up since this is often the side that is placed down. This tends to clog any grate that is on the back of the mobile device.

As will be appreciated, as an alternative to **Figure 3** a dome actuator **142** may not be included and instead plunger **330** would be conductive, thus triggering the switch when in contact with contact **162.** In this case, key web **320** needs to be resilient enough to bring the key back into its upright position once it is released but the remainder of the process works in the same way.

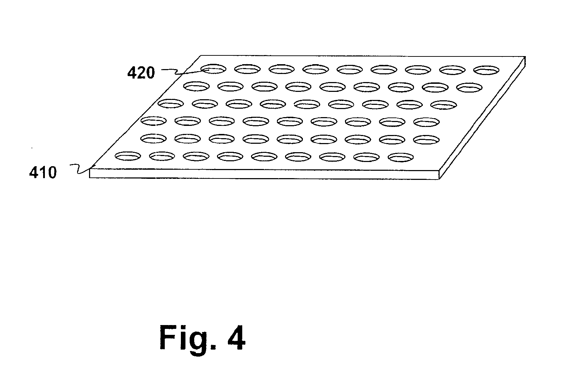

A fuel cell is illustrated with respect to **Figure 4. Figure 4** shows a fuel cell **410** having a membrane, which in one embodiment could be the same as fuel cell **310** from **Figure 3****.** As is seen, a series of holes **420** are provided in fuel cell **410** to allow plungers such as plunger **330** to proceed through and to make contact with contact **162** either through a dome actuator or directly.

In some embodiments it may possible for the fuel cell membrane to have circuits printed on it, and thus the fuel cell itself becomes the printed circuit board.

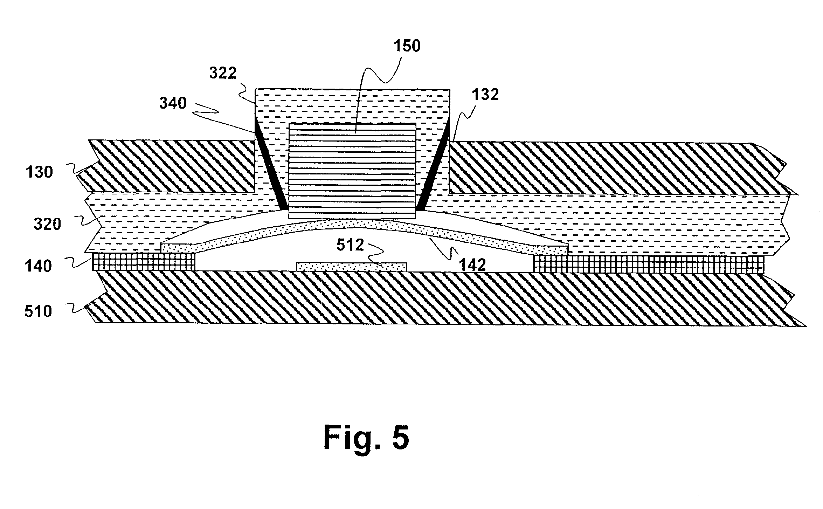

Reference is now made to **Figure 5. Figure 5** shows a fuel cell **510** in which circuits are printed thereon. In particular, a contact **512** is printed onto the fuel cell **510.**

A dome actuator panel **140** contains a plurality dome actuators **142** which are adapted to make contact with contact **512.**

A key web **320,** forming a portion of the keyboard of a device, sits above dome actuator panel **140** and includes a plurality of keys **322** therein. Keys **322** are adapted to protrude through an aperture **132** of device housing section **130** and a plunger **150** is adapted to depress dome actuator **142** into contact **512.**

Key web **320** includes a series of ventilation holes **340** to allow heat and water vapour to escape from fuel cell **510,** thereby providing the advantages of the present disclosure. The ventilation holes facilitate heat and water vapour dissipation, which are by-products of the fuel cell. Also, a device when placed on a surface is usually placed in its back. By having the ventilation holes **340** in the key web, and thereby in the upward facing keyboard, the holes will not be plugged as easily with dirt as they would be if located in the back of a mobile device. Since heat rises, heat dissipation is further enhanced in the configuration of **Figure 3****.**

A further advantage of ventilation through a keyboard is the greater surface area for potential ventilation. Specifically, devices that ventilate through a hole in a back or side of the device have one location for water vapour to escape, leading to more condensation and less heat and vapour dissipation. The keyboard of a device typically has a key web with multiple keys. If each has ventilation holes **340,** the ventilation of the device is spread over a larger area, making ventilation more efficient and potentially reducing condensation that could affect a user of the device.

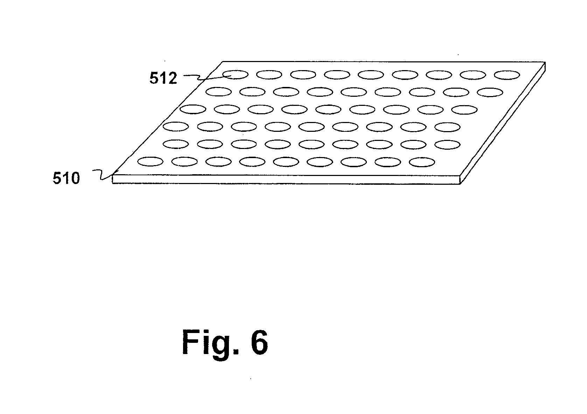

Referring to **Figure 6****.** Fuel cell **510** includes contacts **512.** As seen from **Figure 6****,** a plurality of contacts **512** are configured on fuel cell **510.** The configuration of the keys will be determined by the mobile device and the present disclosure is not meant to be limited to any particular configuration of contacts **512.** As will be appreciated with reference to **Figures 5** and **6****,** venting of water vapour and heat can be done around actuators **142** or can be done through ports in key web **320** and dome actuator panel **140.**

Light can be projected through the fuel cell **510, 410, 310** or **205** either by introducing "light pipes" in the membrane to allow light to filter through, or by forming the fuel cell such that it is transparent enough to allow light to proceed through the membrane, thereby allowing for the illumination of keys.

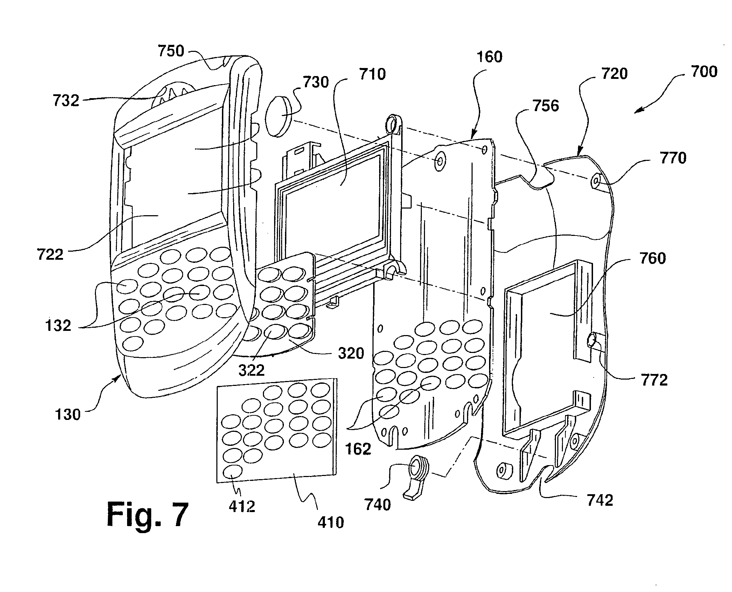

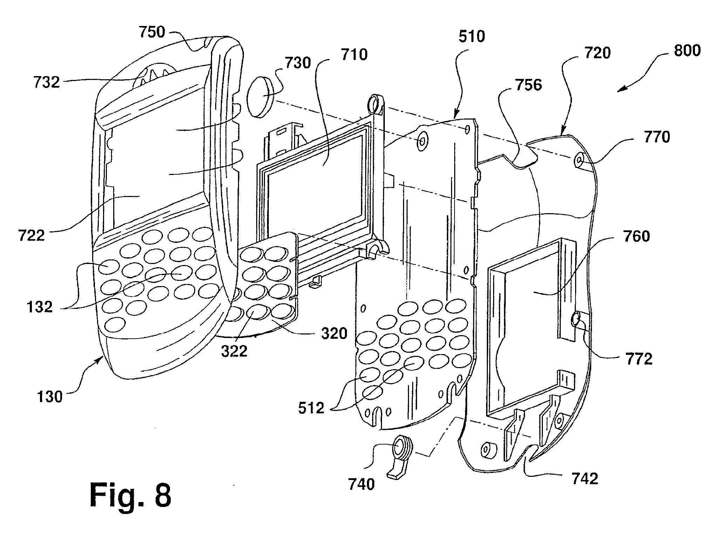

An exemplary device structure is shown in **Figures 7** and **8****.** This structure is only an example and other configurations are possible.

Referring to **Figure 7****,** a device **700** includes a printed circuit board **160.** Most of the internal components of the mobile communication device are preferably mounted on the PCB **160.** The keyboard is preferably formed with a key web **320** over a plurality of contacts **162** on the PCB **160.** The key web **320** and a plurality of contacts **162** are configured such that each key in the key web **320** contacts and operates one of the contacts **162** when the key is depressed. Other configurations might also be implemented as indicated above. Further, these implementations may include the number of contacts **162** being less than the number of keys **322,** or the number of contacts **162** may be greater then the number of keys **322** on key web **320.**

Key web **320** and contacts **162** are also positioned such that apertures **132** on device housing section **130** are at least partially exposed to keys **322.** Portions of the key web **320** are exposed by the apertures **132** to provide key surfaces that may be depressed by a user to provide data input to the device **700.** Such data input may, for example, be used to generate data communications on the device **700.**

A fuel cell **410** having a series of holes **412** therein is adapted to be placed between the key web **320** and contacts **162,** whereby holes **412** align with contacts **162** to allow a contact from a plunger (not shown) of key web **322** to make contact with contact **162.**

A display **710** is preferably mounted on the PCB **160** as shown in **Figure 7****.** When the device housing section **130** and a second device housing section **720** are coupled together, an aperture **722** in the housing section **130** at least partially exposes the display **710.** The aperture **722** in the device housing section **130** and the display **710** on PCB **160** may be positioned such that a viewing area of the display **710** is exposed. The frame and other components associated with the display **710** are preferably hidden from view when the first and second device housing sections **130** and **720** are coupled together. A speaker **730** is preferably mounted at or near the top of PCB **160.** One or more apertures **732** are positioned to or at least partially expose the speaker **730** when the device housing portions **130** and **720** are coupled together.

A microphone **740** is mounted in the second device housing section **720.** The microphone **740** is at least partially exposed by an aperture **742** in the second device housing section **720,** and coupled to the PCB and other device components. Audio and/or voice inputs to the microphone **740** may be used, for example, to generate voice communications. When the microphone **740** is positioned in the housing, an aperture (not shown) is provided in the first device housing section **132** at least partially expose the microphone **740.** The microphone **740** may alternatively be mounted to the device housing section **130** or PCB **160.**

Device housing sections **130** and **720** may include further apertures to expose or partially expose other device components. In the first device housing section **130,** apertures **750, 752** and **754** are configured to partially expose the auxiliary input/output (I/O) devices. An aperture **756** is similarly positioned in device housing section **720** to at least partially expose and auxiliary input/output device. An aperture **760** is adapted to accommodate the fuel tank such as fuel tank **260** from **Figure 2****.** As will be appreciated, the configuration of **Figure 7** provides the further advantage that heat is absorbed by tank **260,** and thus placing it under PCB **160** is beneficial.

As will be appreciated, fuel tank **260** can be connected to fuel cell **410** through the use of micro-valves and piping to provide for the flow of the fuel through fuel cell **410.**

Various affixing portions such as **770** and **772** may be adapted to receive screws to hold PCB **160** and casing **130** and casing **720** together.

The above is not meant to be limiting and other components may be provided within device **700.**

Similarly, referring to **Figure 8****,** this figure utilizes similar reference numerals to those in **Figure 7** for mobile device **800,** with the exception of PCB **160** from **Figure 7** being replaced by fuel cell **510** and contacts **162** being replaced by contacts **512.** In this way, the functionality of PCB **160** is replaced by a fuel cell which can act as a printed circuit board.

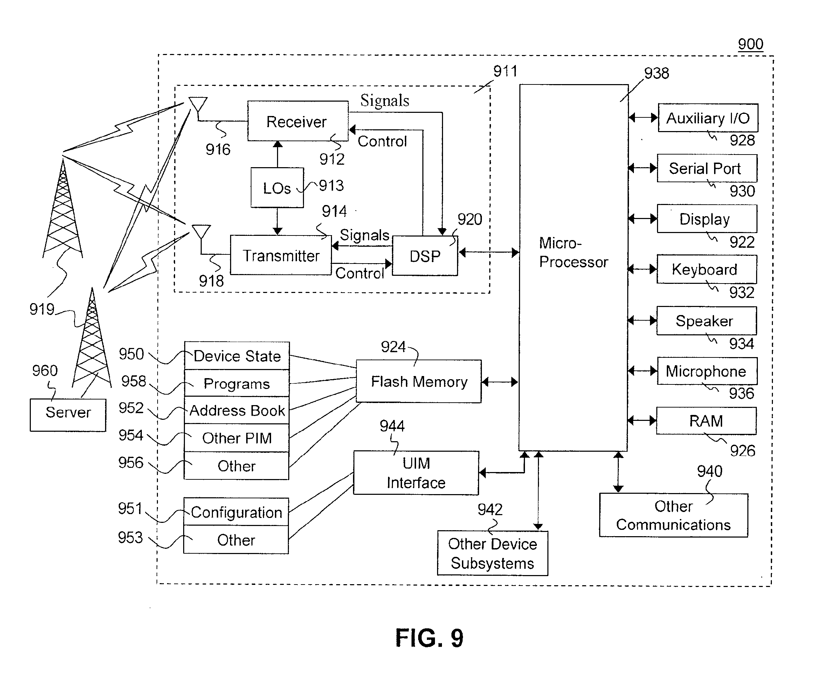

The above can be implemented on any mobile device. Such mobile devices include, but are not limited to, personal digital assistants, cellular telephones, wireless data devices, among others. Reference is now made to **Figure 9****.** The circuits shown on mobile device **900** can be powered by a fuel cell assembly, as illustrated in **Figure 2****.**

Mobile device **900** is preferably a two-way wireless communication device having at least voice and data communication capabilities. Mobile device **900** preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile device **900** is enabled for two-way communication, it will incorporate a communication subsystem **911,** including both a receiver **912** and a transmitter **914,** as well as associated components such as one or more, preferably embedded or internal, antenna elements **916** and **918,** local oscillators (LOs) **913,** and a processing module such as a digital signal processor (DSP) **920.** As will be apparent to those skilled in the field of communications, the particular design of the communication subsystem **911** will be dependent upon the communication network in which the device is intended to operate.

Mobile network **900** could be any network including but not limited to: the global system for mobile communications (GSM), general packet radio service (GPRS), code division multiple access (CDMA), universal mobile telecommunications system (UMTS), wideband code divisional multiple access (WCDMA) among others. These technologies allow the use of voice, data or both at the same time.

Network access requirements will also vary depending upon the type of network 919. For example, In UMTS and GPRS networks, network access is associated with a subscriber or user of mobile device **900.** For example, a GPRS mobile device therefore requires a subscriber identity module (SIM) card in order to operate on a GPRS network. In UMTS and LTE a USIM or SIM module is required. In CDMA a RUIM card or module is required. These will be referred to as a UIM interface herein. Without a valid UIM interface, a mobile device may not be fully functional. Local or non-network communication functions, as well as legally required functions (if any) such as emergency calling, may be available, but mobile device **900** will be unable to carry out any other functions involving communications over the network **900.** The UIM interface **944** is normally similar to a card-slot into which a card can be inserted and ejected like a diskette or PCMCIA card. The UIM card can have approximately 64K of memory and hold many key configuration **951,** and other information **953** such as identification, and subscriber related information.

When required network registration or activation procedures have been completed, mobile device **900** may send and receive communication signals over the network **919.** Signals received by antenna **916** through communication network **919** are input to receiver **912,** which may perform such common receiver functions as signal amplification, frequency down conversion, filtering, channel selection and the like, and in the example system shown in **Figure 9****,** analog to digital (A/D) conversion. A/D conversion of a received signal allows more complex communication functions such as demodulation and decoding to be performed in the DSP **920.** In a similar manner, signals to be transmitted are processed, including modulation and encoding for example, by DSP **920** and input to transmitter **914** for digital to analog conversion, frequency up conversion, filtering, amplification and transmission over the communication network **919** via antenna **918.** DSP **920** not only processes communication signals, but also provides for receiver and transmitter control. For example, the gains applied to communication signals in receiver **912** and transmitter **914** may be adaptively controlled through automatic gain control algorithms implemented in DSP **920.**

Network **919** may further communicate with multiple systems, including a server 960 and other elements (not shown). For example, network **919** may communicate with both an enterprise system and a web client system in order to accommodate various clients with various service levels.

Mobile device **900** preferably includes a microprocessor **938** which controls the overall operation of the device. Communication functions, including at least data communications, are performed through communication subsystem **911.** Microprocessor **938** also interacts with further device subsystems such as the display **922,** flash memory **924,** random access memory (RAM) **926,** auxiliary input/output (I/O) subsystems **928,** serial port **930,** keyboard **932,** speaker **934,** microphone **936,** a short-range communications subsystem **940** and any other device subsystems generally designated as **942.**

Some of the subsystems shown in **Figure 9** perform communication-related functions, whereas other subsystems may provide "resident" or on-device functions. Notably, some subsystems, such as keyboard **932** and display **922,** for example, may be used for both communication-related functions, such as entering a text message for transmission over a communication network, and device-resident functions such as a calculator or task list.

Operating system software used by the microprocessor **938** is preferably stored in a persistent store such as flash memory **924,** which may instead be a read-only memory (ROM) or similar storage element (not shown). Those skilled in the art will appreciate that the operating system, specific device applications, or parts thereof, may be temporarily loaded into a volatile memory such as RAM **926.** Received communication signals may also be stored in RAM **926.** Further, a unique identifier is also preferably stored in read-only memory.

As shown, flash memory **924** can be segregated into different areas for both computer programs **958** and program data storage **950, 952, 954** and **956.** These different storage types indicate that each program can allocate a portion of flash memory **924** for their own data storage requirements. Microprocessor **938,** in addition to its operating system functions, preferably enables execution of software applications on the mobile device. A predetermined set of applications that control basic operations, including at least data and voice communication applications for example, will normally be installed on mobile device **900** during manufacturing. A preferred software application may be a personal information manager (PIM) application having the ability to organize and manage data items relating to the user of the mobile device such as, but not limited to, e-mail, calendar events, voice mails, appointments, and task items. Naturally, one or more memory stores would be available on the mobile device to facilitate storage of PIM data items. Such PIM application would preferably have the ability to send and receive data items, via the wireless network **919.** In a preferred embodiment, the PIM data items are seamlessly integrated, synchronized and updated, via the wireless network **919,** with the mobile device user's corresponding data items stored or associated with a host computer system. Further applications may also be loaded onto the mobile device **900** through the network **919,** an auxiliary I/O subsystem **928,** serial port **930,** short-range communications subsystem **940** or any other suitable subsystem **942,** and installed by a user in the RAM **926** or preferably a non-volatile store (not shown) for execution by the microprocessor **938.** Such flexibility in application installation increases the functionality of the device and may provide enhanced on-device functions, communication-related functions, or both. For example, secure communication applications may enable electronic commerce functions and other such financial transactions to be performed using the mobile device **900.** These applications will however, according to the above, in many cases need to be approved by a carrier.

In a data communication mode, a received signal such as a text message or web page download will be processed by the communication subsystem **911** and input to the microprocessor **938,** which preferably further processes the received signal for output to the display **922,** or alternatively to an auxiliary I/O device **928.** A user of mobile device **900** may also compose data items such as email messages for example, using the keyboard **932,** which is preferably a complete alphanumeric keyboard or telephone-type keypad, in conjunction with the display **922** and possibly an auxiliary I/O device **928.** Such composed items may then be transmitted over a communication network through the communication subsystem **911.**

For voice communications, overall operation of mobile device **900** is similar, except that received signals would preferably be output to a speaker **934** and signals for transmission would be generated by a microphone **936.** Alternative voice or audio I/O subsystems, such as a voice message recording subsystem, may also be implemented on mobile device **900.** Although voice or audio signal output is preferably accomplished primarily through the speaker **934,** display **922** may also be used to provide an indication of the identity of a calling party, the duration of a voice call, or other voice call related information for example.

Serial port **930** in **Figure 9** would normally be implemented in a personal digital assistant (PDA)-type mobile device for which synchronization with a user's desktop computer (not shown) may be desirable. Such a port **930** would enable a user to set preferences through an external device or software application and would extend the capabilities of mobile device **900** by providing for information or software downloads to mobile device **900** other than through a wireless communication network. The alternate download path may for example be used to load an encryption key onto the device through a direct and thus reliable and trusted connection to thereby enable secure device communication.

Alternatively, serial port **930** could be used for other communications, and could include as a universal serial bus (USB) port. An interface is associated with serial port **930**.

Other communications subsystems **940,** such as a short-range communications subsystem, is a further optional component which may provide for communication between mobile device **900** and different systems or devices, which need not necessarily be similar devices. For example, the subsystem **940** may include an infrared device and associated circuits and components or a Bluetooth™ communication module to provide for communication with similarly enabled systems and devices.

The embodiments described herein are examples of structures, systems or methods having elements corresponding to elements of the techniques of this application. This written description may enable those skilled in the art to make and use embodiments having alternative elements that likewise correspond to the elements of the techniques of this application.

## Claims

1. A mobile device comprising:
a keyboard, the keyboard comprising a key web having at least one key, the at least one key including channels for ventilation therein;
a printed circuit board having at least one contact responsive to the keyboard;
and
a fuel cell assembly having:
a fuel cell located between the keyboard and the printed circuit board, said fuel cell having a membrane and at least one aperture corresponding with the at least one contact;
a tank adapted to store a fuel for the fuel cell; and
piping connecting the tank with the fuel cell,
wherein the fuel cell ventilates through the keyboard.

2. The mobile device of claim 1, wherein each of the at least one key includes a plunger, said plunger adapted to fit through one of the at least one aperture in said fuel cell.

3. The mobile device of claim 2, wherein the plunger is made of a conductive material.

4. The mobile device of any one of claims 1 to 3, wherein the fuel cell is transparent and light conducting.

5. The mobile device of any one of claims 1 to 4, wherein the fuel cell includes light pipes.

6. The mobile device of any one of claims 1 to 5, wherein the fuel tank is located below the printed circuit board.

7. A mobile device comprising:
a keyboard, the keyboard comprising a key web having at least one key, the at least one key including channels for ventilation therein; and
a fuel cell assembly having:
a fuel cell, the fuel cell having a membrane and at least one contact responsive to the keyboard;
a printed circuit board for the mobile device, the printed circuit board printed on the fuel cell;
a tank adapted to store a fuel for the fuel cell; and
piping connecting the tank with the fuel cell,
wherein the fuel cell ventilates through the keyboard.

8. The mobile device of claim 7, wherein each of the at least one key includes a plunger, said plunger adapted to provide a contact between the at least one key and the contact on the fuel cell.

9. The mobile device of claim 8, wherein the plunger is made of a conductive material.

10. The mobile device of any one of claims 7 to 9, wherein the fuel cell includes light pipes.

11. The mobile device of any one of any one of claims 7 to 10, wherein the fuel tank is located below the fuel cell.

## Patentansprüche

1. Eine mobile Vorrichtung, die aufweist:
eine Tastatur, wobei die Tastatur ein Tastennetz mit zumindest einer Taste aufweist, wobei die zumindest eine Taste Kanäle zur Ventilation darin umfasst;
eine Leiterplatte mit zumindest einem Kontakt reagierend auf die Tastatur;
und
eine Brennstoffzellenanordnung mit:
einer Brennstoffzelle, die sich zwischen der Tastatur und der Leiterplatte befindet, wobei die Brennstoffzelle eine Membran und zumindest Öffnung hat, die dem zumindest einen Kontakt entspricht;
einem Tank, der ausgebildet ist zum Aufnehmen von Brennstoff für die Brennstoffzelle; und
Rohrleitungen, die den Tank mit der Brennstoffzelle verbinden,
wobei die Brennstoffzelle über die Tastatur ventiliert.

2. Die mobile Vorrichtung gemäß Anspruch 1, wobei jede der zumindest einen Taste einen Kolben umfasst, wobei der Kolben ausgebildet ist, durch eine der zumindest einen Öffnung in der Brennstoffzelle zu passen.

3. Die mobile Vorrichtung gemäß Anspruch 2, wobei der Kolben aus einem leitenden Material hergestellt ist.

4. Die mobile Vorrichtung gemäß einem der Ansprüche 1 bis 3, wobei die Brennstoffzelle transparent und Licht-leitend ist.

5. Die mobile Vorrichtung gemäß einem der Ansprüche 1 bis 4, wobei die Brennstoffzelle Lichtleitungen umfasst.

6. Die mobile Vorrichtung gemäß einem der Ansprüche 1 bis 5, wobei sich der Brennstofftank unter der Leiterplatte befindet.

7. Ein mobile Vorrichtung, die aufweist:
eine Tastatur, wobei die Tastatur ein Tastennetz mit zumindest einer Taste aufweist, wobei die zumindest eine Taste Kanäle zur Ventilation darin umfasst; und
eine Brennstoffzellenanordnung mit:
einer Brennstoffzelle, wobei die Brennstoffzelle eine Membran und
zumindest einen Kontakt reagierend auf die Tastatur hat;
einer Leiterplatte für die mobile Vorrichtung, wobei die Leiterplatte auf der Brennstoffzelle gedruckt ist;
einem Tank, der ausgebildet ist zum Aufnehmen von Brennstoff für die Brennstoffzelle; und
Rohrleitungen, die den Tank mit der Brennstoffzelle verbinden,
wobei die Brennstoffzelle über die Tastatur ventiliert.

8. Die mobile Vorrichtung gemäß Anspruch 7, wobei jede der zumindest einen Taste einen Kolben umfasst, wobei der Kolben ausgebildet ist zum Vorsehen eines Kontakts zwischen der zumindest einen Taste und dem Kontakt auf der Brennstoffzelle.

9. Die mobile Vorrichtung gemäß Anspruch 8, wobei der Kolben aus einem leitenden Material hergestellt ist.

10. Die mobile Vorrichtung gemäß einem der Ansprüche 7 bis 9, wobei die Brennstoffzelle Lichtleitungen umfasst.

11. Die mobile Vorrichtung gemäß einem der Ansprüche 7 bis 10, wobei sich der Brennstofftank unter der Brennstoffzelle befindet.

## Revendications

1. Dispositif mobile comprenant :
un clavier, le clavier comprenant un réseau de touches composé d'au moins une touche, ladite au moins une touche incluant des canaux de ventilation qui la traversent ;
une carte de circuits imprimés comprenant au moins un contact qui répond au clavier ; et
un ensemble de pile à combustible comportant :
une pile à combustible située entre le clavier et la carte de circuits imprimés, ladite pile à combustible possédant une membrane et au moins une ouverture correspondant audit au moins un contact ;
un réservoir conçu pour stocker un combustible pour la pile à combustible ; et
des conduites reliant le réservoir et la pile à combustible ;
dans lequel la pile à combustible est ventilée au travers du clavier.

2. Dispositif mobile selon la revendication 1, dans lequel chacune des touches parmi ladite au moins une touche comprend un plongeur, ledit plongeur étant conçu pour s'engager dans une ouverture parmi ladite au moins une ouverture dans ladite pile à combustible.

3. Dispositif mobile selon la revendication 2, dans lequel le plongeur est fait d'un matériau conducteur.

4. Dispositif mobile selon l'une quelconque des revendications 1 à 3, dans lequel la pile à combustible est transparente et conduit la lumière.

5. Dispositif mobile selon l'une quelconque des revendications 1 à 4, dans lequel la pile à combustible comprend des guides de lumière.

6. Dispositif mobile selon l'une quelconque des revendications 1 à 5, dans lequel le réservoir de combustible est situé au-dessous de la carte de circuits imprimés.

7. Dispositif mobile comprenant :
un clavier, le clavier comprenant un réseau de touches composé d'au moins une touche, ladite au moins une touche incluant des canaux de ventilation qui la traversent ;
un ensemble de pile à combustible comportant :
une pile à combustible, ladite pile à combustible possédant une membrane et au moins un contact qui répond au clavier ;
une carte de circuits imprimés pour le dispositif mobile, la carte de circuits imprimés étant imprimée sur la pile à combustible ;
un réservoir conçu pour stocker un combustible pour la pile à combustible ; et
des conduites reliant le réservoir et la pile à combustible ;
dans lequel la pile à combustible est ventilée au travers du clavier.

8. Dispositif mobile selon la revendication 7, dans lequel chacune des touches parmi ladite au moins une touche comprend un plongeur, ledit plongeur étant conçu pour fournir un contact entre ladite au moins une touche et le contact sur la pile à combustible.

9. Dispositif mobile selon la revendication 8, dans lequel le plongeur est fait d'un matériau conducteur.

10. Dispositif mobile selon l'une quelconque des revendications 7 à 9, dans lequel la pile à combustible comprend des guides de lumière.

11. Dispositif mobile selon l'une quelconque des revendications 7 à 10, dans lequel le réservoir à combustible est situé au-dessous de la pile à combustible.
